# EUROPÄISCHE PATENTSCHRIFT

(11) **EP 3 294 685 B1**
(45) Veröffentlichungstag und Bekanntmachung des Hinweises auf die Patenterteilung: **20.02.2019**
(21) Anmeldenummer: 15739496.6
(22) Anmeldetag: 11.05.2015
(51) Int. Cl.: C04B 28/04

(54) **FRISCHMÖRTEL UND VERFAHREN ZUM ERZEUGEN EINES WASSERDURCHLÄSSIGEN RINGSPALTMÖRTELS**
FRESH MORTAR AND METHOD FOR PRODUCING A WATER-PERMEABLE ANNULAR-GAP MORTAR
MORTIER FRAIS ET PROCÉDÉ POUR PRODUIRE UN MORTIER DE REMPLISSAGE DES ESPACES ANNULAIRES PERMÉABLE À L'EAU

(43) Veröffentlichungstag der Anmeldung: 21.03.2018
(73) Patentinhaber: Porr Bau GmbH, 1100 Wien (AT)
(72) Erfinder: KREMNITZER, Peter, A-1220 Wien (AT); RAUCH, Christian, A-1130 Wien (AT)
(74) Vertreter: Gibler & Poth Patentanwälte KG
(86) Internationale Anmeldenummer: PCT/AT2015/000070
(87) Internationale Veröffentlichungsnummer: WO 2016/179612

(56) Entgegenhaltungen:
- EP-A2- 1 790 624
- DE-B3-102009 008 451
- US-A1- 2002 015 619

## Beschreibung

Die Erfindung betrifft ein Verfahren zum Erzeugen eines wasserdurchlässigen Ringspaltmörtels gemäß dem Oberbegriff des Patentanspruches 1.

Der Ringspalt ist ein Spalt, welcher beim Bau eines Tunnels mittels einer Tunnelbohrmaschine zwischen der Tunnelschalung und dem Untergrund entsteht. Die Tunnelbohrmaschine weist einen Bohrschild auf, mit welchem die Tunnelbohrmaschine in den Untergrund getrieben wird. Am Bohrschild ist ein Schildschwanz angeschlossen, welcher den Druck des Untergrundes aufnimmt, und in welchem Tübbinge zu einer Tunnelschale zusammengefügt werden. Hinter dem Schildschwanz bildet sich hierbei ein Ringspalt, welcher verfüllt werden muss, um ein Setzen des Untergrundes zu verhindern und den Tunnel genau zu positionieren. Die Verfüllung des Ringspaltes erfolgt hierbei mittels eines Ringspaltmörtels, welcher durch Pumpleitungen durch den Schildschwanz oder durch die Tübbinge in den Ringspalt gepresst wird.

Um den hydrostatischen Druck vom Untergrundwasser auf die Tübbinge zu reduzieren ist es allerdings oftmals erforderlich den Ringspalt wasserdurchlässig zu verfüllen. Herkömmlicherweise erfüllt allerdings nur ein wasserundurchlässiger Ringspaltmörtel die Erfordernisse der Pumpbarkeit, da ein Ringspaltmörtel welcher im erhärteten Zustand wasserdurchlässig wäre, durch seine Struktur, insbesondere durch die Sieblinie der Zuschlagstoffe und die Haufwerksporigkeit, nicht durch eine Pumpleitung gefördert werden kann.

Um den Ringspalt wasserdurchlässig zu verfüllen wird dieser daher oft mit Perlkies verfüllt, da dieser eine wasserdurchlässige und bedingt tragfähige Verfüllung für den Ringspalt ausbildet. Die Verwendung von Perlkies ist allerdings sehr aufwendig, da die örtliche Verfügbarkeit von Perlkies oft nicht gegeben ist und zum Einblasen des Perlkieses eigene Vorrichtungen notwendig sind.

Aus der US 2002/0015619 A1 ist ein Verfahren zum Verfüllen von Hohlräumen bekannt, welche beispielsweise durch Bergbau im Untergrund entstanden sind. Hierbei wird ein Mörtel verwendet, welcher Zuschlagstoffe, Wasser, Bindemittel und einen Schaummittel aufweist, um die Förderung zu erleichtern und Wasser einzusparen. Am Ende wird ein Entschäumer zugegeben um den Schaum kollabieren zu lassen.

Aus der DE 102009008451 B3 ist die Verwendung eines geschäumten Mörtels für den Tunnelbau zum Ausbilden eines wasserdurchlässigen Ringspaltmörtels bekannt. Der Mörtel umfasst als Zuschlagstoffe ein besonders amorphes Granulat.

Aus der EP 1 790 624 A2 ist die Verwendung eines geschäumten Mörtels für den Tunnelbau bekannt, wobei der Mörtel einen verformbaren Ringspaltmörtel ausbilden soll und hierfür Polymerschaumstoffe als Zuschlagstoffe aufweist.

Aufgabe der Erfindung ist es daher, ein Verfahren der eingangs genannten Art anzugeben, mit welchem ein Ringspaltmörtel auch mittels einer langen Förderleitung in den vorgesehenen Ort eingebracht werden kann, wobei der Ringspaltmörtel nach dem Erhärten eine gute Wasserdurchlässigkeit und Tragfähigkeit aufweist.

Erfindungsgemäß wird dies durch die Merkmale des Patentanspruches 1 erreicht.

Dadurch ergibt sich der Vorteil, dass ein tragfähiger und wasserdurchlässiger Ringspaltmörtel in den Ringspalt zuverlässig und mit wenig Aufwand eingebracht werden kann. Hierbei kann insbesondere die übliche Zuführung des Ringspaltmörtels weiter verwendet werden, weshalb ein Wechsel von einem herkömmlichen wasserundurchlässigen Ringspaltmörtel zu einem wasserdurchlässigen Ringspaltmörtel schnell und ohne wesentliche Umbauten erfolgen kann. Hierbei kann ein Mörtelzwischenprodukt aufgeschäumt werden, wodurch dieses gut förderbar wird. Durch das Verhältnis der einzelnen Hohlraumgehalte und des Luftporengehaltes sind die Zuschlagstoffe ausreichend mobilisiert, um gepumpt zu werden, wobei es noch zu keiner Entmischung in der Förderleitung kommt. Im Bereich des Endes der Förderleitung wird in dieses Mörtelzwischenprodukt ein Entschäumer eingebracht, wodurch der Schaum wieder in sich zusammenfällt und der fertige Mörtel im Wesentlichen wieder die Eigenschaften aufweist, welche das Mörtelzwischenprodukt unaufgeschäumt aufgewiesen hätte. Durch das Verhältnis des Hohlraumgehaltes der Zuschlagstoffkörnung alleine und des Hohlraumgehaltes der Zuschlagstoffkörnung, des Wassers und des Bindemittel zusammen bildet sich ein wasserdurchlässiger Ringspaltmörtel aus, auch wenn der umliegende Untergrund nicht wasserdurchlässig ist, und dass Wasser aus dem Frischmörtel nicht ablaufen kann. Dadurch kann reproduzierbar und vorgebbar ein tragfähiger und wasserdurchlässiger Ringspaltmörtel in einen Ringspalt eingebracht werden, welcher einfach herzustellen und über weite Strecken pumpbar ist.

Die Erfindung betrifft weiters einen Frischmörtel zum Ausbilden eines wasserdurchlässigen Ringspaltmörtels gemäß dem Oberbegriff des Patentanspruches 9.

Aufgabe der Erfindung ist es daher weiters einen Frischmörtel der eingangs genannten Art anzugeben, welcher Ringspaltmörtel mittels einer langen Förderleitung in den vorgesehenen Ort eingebracht werden kann, wobei der Ringspaltmörtel nach dem Erhärten eine gute Wasserdurchlässigkeit und Tragfähigkeit aufweist.

Erfindungsgemäß wird dies durch die Merkmale des Patentanspruches 9 erreicht.

Die Vorteile des Frischmörtels entsprechen den Vorteilen des obenstehenden Verfahrens.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird anhand der folgenden bevorzugten Ausführungsformen näher beschrieben.

Es ist ein Verfahren zum Erzeugen eines wasserdurchlässigen Ringspaltmörtels vorgesehen, wobei:
- ein aufgeschäumtes Mörtelzwischenprodukt gebildet wird, wobei das Mörtelzwischenprodukt Zuschlagstoffe, Wasser und Bindemittel umfasst, wobei die Zuschlagstoffe eine Zuschlagstoffkörnung mit einem Hohlraumgehalt zwischen 30% und 50% aufweisen, wobei die Zuschlagstoffkörnung, das Wasser und das Bindemittel zusammen einen Hohlraumgehalt von 10% bis 25% aufweisen,
- das aufgeschäumte Mörtelzwischenprodukt durch eine Förderleitung in einen Ringspalt gefördert wird und unmittelbar nach dem Verlassen der Förderleitung einen Luftporengehalt aufweist, welcher Luftporengehalt absolut um 10% bis 25% größer ist als der Hohlraumgehalt der Zuschlagstoffkörnung, des Wassers und des Bindemittels zusammen,
- im Bereich des Endes der Förderleitung aus dem Mörtelzwischenprodukt durch Beimischung eines Entschäumers ein Frischmörtel gebildet wird,
- und der Schaum durch den Entschäumer vor dem Erhärten des Frischmörtels zu dem Ringspaltmörtel zumindest teilweise zerstört wird.

Das Mörtelzwischenprodukt kann insbesondere alle Bestandteile eines herkömmlichen Ringspaltmörtels umfassen, also Zuschlagstoffe, Wasser und Bindemittel, wobei die Bestandteile insbesondere derart ausgewählt werden können, dass die Eigenschaften des unaufgeschäumten Mörtelzwischenproduktes im erhärteten Zustand im Wesentlichen den Eigenschaften des am Ende des Verfahrens hergestellten festen Ringspaltmörtels entsprechen.

Hierbei ist vorgesehen, dass die Zuschlagstoffe eine Zuschlagstoffkörnung mit einem Hohlraumgehalt zwischen 30% und 50% aufweisen. Der Hohlraumgehalt der Zuschlagstoffkörnung kann insbesondere nach der ÖN EN 1097-3 bestimmt werden. Der Hohlraumgehalt ist hierbei der Anteil des Hohlraumes zwischen den Körnern der Zuschlagstoffe bei einer Schüttung der reinen Zuschlagstoffe an dem Gesamtvolumen von Zuschlagstoffen und Hohlraum. Hierbei tragen in den Zuschlagstoffen enthaltene Luftporen, beispielsweise bei Blähton, nicht zu dem Hohlraumgehalt der Zuschlagstoffkörnung bei, da der Hohlraumgehalt von dem Raum zwischen den Körnern der Zuschlagstoffe, also der Zuschlagstoffkörnung, abhängt. Der Hohlraumgehalt der Zuschlagstoffkörnung ist eine Größe, welche lediglich von der Form und Korngrößenverteilung der Zuschlagstoffe abhängig ist und durch das Aufschäumen nicht beeinflusst wird. Vorteilhaft an einem derart hohen Hohlraumgehalt der Zuschlagstoffkörnung ist es, dass gut ein poröser und wasserdurchlässiger Ringspaltmörtel erreicht werden kann.

Der Hohlraumgehalt der Zuschlagstoffkörnung kann hierbei durch die Wahl der Sieblinie, insbesondere durch die Reduzierung der Feinanteile, eingestellt werden. Weiters kann der Hohlraumgehalt der Zuschlagstoffkörnung durch die Geometrie der Zuschlagstoffkörnung eingestellt werden. Hierbei führen kantige oder unregelmäßig geformte Körner der Zuschlagstoffe zu einem höheren Hohlraumgehalt der Zuschlagstoffkörnung als runde Körner.

Weiters ist vorgesehen, dass die Zuschlagstoffkörnung, das Wasser und das Bindemittel zusammen einen Hohlraumgehalt von 10% bis 25%, insbesondere 15% bis 20%, aufweisen. Dies bedeutet, dass bei einem Gemisch aus den Zuschlagstoffen, dem Wasser und dem Bindemittel zwischen den einzelnen Komponenten noch immer ein Hohlraum von 10% bis 25% des Gesamtvolumens besteht. Dieser Hohlraumgehalt entspricht einem fiktiven ungeschäumten Mörtelzwischenprodukt, wobei dieser Hohlraumgehalt im Wesentlichen auch dem Hohlraumgehalt des Frischmörtels, nachdem der Entschäumer den Schaum zerstört hat, wobei hier der Hohlraumgehalt des Frischmörtels geringfügig höher sein kann, da das an den Zuschlagstoffen haftende Wasser und Bindemittel zu einem lockereren Gefüge mit höherem Hohlraum. Weiters können bei dem Erhärten des Frischmörtels ein Abfließen von Wasser oder Bindemittel in den umliegenden Untergrund und/oder chemische Prozesse zwischen Wasser und Bindemittel diesen Hohlraumgehalt weiter geringfügig erhöhen. Durch diesen hohen Hohlraumgehalt bleibt bei einer Mischung aus Zuschlagstoffen, Wasser und Bindemittel noch immer Hohlraum übrig, wodurch der Ringspaltmörtel selbst dann wasserdurchlässig wird, selbst wenn das Wasser aus dem Bindemittel aus dem Ringspalt nicht abfließen kann.

Um die Förderbarkeit des Mörtelzwischenproduktes zu erhöhen, wird dieses aufgeschäumt. Als Schaum werden hierbei die geschlossenen Luftporen bezeichnet, welche im Wasser und/oder im Bindemittel, also insbesondre zwischen den Zuschlagsstoffen, angeordnet sind. Hierbei kann das Mörtelzwischenprodukt, insbesondere durch Zugabe eines Luftporenmittels, an sich durch die Bildung von Luftporen aufgeschäumt werden, wodurch der Schaum erzeugt wird. Weiters kann ein fertiger Schaum zu dem restlichen Mörtelzwischenprodukt hinzugegeben werden. Durch den Schaum, also dem hohen Gehalt an Luftporen, wird dass Mörtelzwischenprodukt besser förderbar.

Hierbei ist vorgesehen, das aufgeschäumte Mörtelzwischenprodukt durch eine Förderleitung in einen Ringspalt gefördert wird und unmittelbar nach dem Verlassen der Förderleitung einen Luftporengehalt aufweist, welcher Luftporengehalt absolut um 10% bis 25%, insbesondere 15% bis 20%, größer ist als der Hohlraumgehalt der Zuschlagstoffkörnung, des Wassers und des Bindemittels zusammen. Der Luftporengehalt ist hierbei der Volumenanteil der Luft in dem Mörtelzwischenprodukt im Vergleich zu dem Gesamtvolumen des Mörtelzwischenproduktes. Dass der Luftporengehalt absolut um 10% bis 25% größer ist als der Hohlraumgehalt der Zuschlagstoffkörnung, des Wassers und des Bindemittels zusammen bedeutet hierbei, dass bei einem Hohlraumgehalt der Zuschlagstoffkörnung, des Wassers und des Bindemittels zusammen von 10% der Luftporengehalt des aufgeschäumten Mörtelzwischenproduktes zwischen 20% und 35% beträgt, und dass bei einem Hohlraumgehalt der Zuschlagstoffkörnung, des Wassers und des Bindemittels zusammen von 25% der Luftporengehalt des aufgeschäumten Mörtelzwischenproduktes zwischen 35% und 50% beträgt. Der Luftporengehalt ist daher derart gewählt, dass der Hohlraum zwischen von Zuschlagstoffkörnung, Wassers und Bindemittel vollständig aufgefüllt wird, und zusätzlich das Gesamtvolumen des Mörtelzwischenproduktes beim Schäumen vergrößert wird. Durch diese Vergrößerung des Gesamtvolumens werden die Zuschlagstoffe mobilisiert und dadurch pumpbar, wobei noch keine Entmischung des aufgeschäumten Mörtelzwischenproduktes in der Förderleitung erfolgt.

Bevorzugt kann vorgesehen sein, das aufgeschäumte Mörtelzwischenprodukt unmittelbar nach dem Verlassen der Förderleitung einen Luftporengehalt von insgesamt 30% bis 40% aufweist.

Da der Schaum die Eigenschaften des Mörtelzwischenproduktes im erhärteten Zustand negativ beeinflussen würde, beispielsweise indem die Tragfähigkeit verringert werden würde oder da sich durch den Schaum ein geschlossen poröser Ringspaltmörtel bildet, welcher nicht wasserdurchlässig ist, wird dem aufgeschäumten Mörtelzwischenprodukt im Bereich des Endes der Förderleitung ein Entschäumer beigegeben, wobei das Mörtelzwischenprodukt und der Entschäumer einen Frischmörtel bilden, welcher zu dem festen und wasserdurchlässigen Ringspaltmörtel erhärten kann. Als Frischmörtel wird in diesem Sinne die Mischung aus dem noch aufgeschäumten Mörtelzwischenprodukt und dem Entschäumer bezeichnet. Der Frischmörtel stellt hierbei einen metastabilen Zustand dar, weil der Entschäumer ab dem Kontakt mit dem aufgeschäumten Mörtelzwischenprodukt beginnt den Schaum zu zerstören.

Hierbei kann der Entschäumer, welcher auch als Entlüfter bezeichnet werden kann, den Schaum wieder zumindest teilweise, insbesondere im Wesentlichen vollständig, zerstören, wobei der Frischmörtel nach dem Entschäumen insbesondere wieder im Wesentlichen die gleichen Eigenschaften aufweist wie dass Mörtelzwischenprodukt vor dem Aufschäumen. Mit anderen Worten wird ein Mörtel für die Förderung aufgeschäumt, damit dieser beispielsweise besser oder überhaupt durch eine Förderleitung gefördert werden kann, und nach der Förderung durch das Entschäumen im Wesentlichen wieder in den ursprünglichen Zustand rückgeführt. Dadurch ergibt sich der Vorteil, dass ein tragfähiger und wasserdurchlässiger Ringspaltmörtel in den Ringspalt zuverlässig und mit wenig Aufwand eingebracht werden kann. Hierbei kann insbesondere die übliche Zuführung des Ringspaltmörtels weiter verwendet werden, weshalb ein Wechsel von einem herkömmlichen wasserundurchlässigen Ringspaltmörtel zu einem wasserdurchlässigen Ringspaltmörtel schnell und ohne wesentliche Umbauten erfolgen kann. Hierbei kann ein Mörtelzwischenprodukt aufgeschäumt werden, wodurch dieses gut förderbar wird. Durch das Verhältnis der einzelnen Hohlraumgehalte und des Luftporengehaltes sind die Zuschlagstoffe ausreichend mobilisiert, um gepumpt zu werden, wobei es noch zu keiner Entmischung in der Förderleitung kommt. Im Bereich des Endes der Förderleitung wird in dieses Mörtelzwischenprodukt ein Entschäumer eingebracht, wodurch der Schaum wieder in sich zusammenfällt und der fertige Mörtel im Wesentlichen wieder die Eigenschaften aufweist, welche das Mörtelzwischenprodukt unaufgeschäumt aufgewiesen hätte. Durch das Verhältnis des Hohlraumgehaltes der Zuschlagstoffkörnung alleine und des Hohlraumgehaltes der Zuschlagstoffkörnung, des Wassers und des Bindemittel zusammen bildet sich ein wasserdurchlässiger Ringspaltmörtel aus, auch wenn der umliegende Untergrund nicht wasserdurchlässig ist, und dass Wasser aus dem Frischmörtel nicht ablaufen kann. Dadurch kann reproduzierbar und vorgebbar ein tragfähiger und wasserdurchlässiger Ringspaltmörtel in einen Ringspalt eingebracht werden, welcher einfach herzustellen und über weite Strecken pumpbar ist.

Weiters ist ein Frischmörtel zum Ausbilden eines wasserdurchlässigen Ringspaltmörtels umfassend ein aufgeschäumtes Mörtelzwischenprodukt vorgesehen, wobei das Mörtelzwischenprodukt Zuschlagstoffe, Wasser, Bindemittel und Schaum umfasst, wobei die Zuschlagstoffe eine Zuschlagstoffkörnung mit einem Hohlraumgehalt zwischen 30% und 50% aufweisen, wobei die Zuschlagstoffkörnung, das Wasser und das Bindemittel zusammen einen Hohlraumgehalt von 10% bis 25% aufweisen, wobei das aufgeschäumte Mörtelzwischenprodukt einen Luftporengehalt aufweist, welcher Luftporengehalt absolut um 10% bis 25% größer ist als der Hohlraumgehalt der Zuschlagstoffkörnung, des Wassers und des Bindemittels zusammen, wobei der Frischmörtel den Entschäumer umfasst, wobei der Entschäumer ausgebildet ist den Schaum vor dem Erhärten des Frischmörtels zu einem Ringspaltmörtel zumindest teilweise zu zerstören.

Weiters kann ein Verfahren zum Bau eines Tunnels mittels einer Tunnelbohrmaschine vorgesehen sein, bei welchem ein Ringspalt zwischen der Tunnelschalung und dem Untergrund mit diesem wasserdurchlässigen Ringspaltmörtel verfüllt wird. Die Tunnelbohrmaschine weist einen Bohrschild auf, mit welchem die Tunnelbohrmaschine in den Untergrund getrieben wird. Am Bohrschild ist ein Schildschwanz angeschlossen, welcher den Druck des Untergrundes aufnimmt, und in welchem Tübbinge zu einer Tunnelschalung zusammengefügt werden. Hinter dem Schildschwanz bildet sich hierbei ein Ringspalt zwischen den Tübbingen und dem Untergrund, welcher verfüllt wird.

Bevorzugt kann vorgesehen sein, dass die Zuschlagstoffe eine Zuschlagstoffkörnung mit einem Hohlraumgehalt zwischen 35% und 45% aufweisen. Ein derartiger Hohlraumgehalt der Zuschlagstoffkörnung weist eine besonders gute Pumpbarkeit bei gleichzeitiger Wasserdurchlässigkeit des fertigen Ringspaltmörtels auf.

Bevorzugt kann vorgesehen sein, dass das Mörtelzwischenprodukt durch die Förderleitung mittels einer Pumpe gepumpt wird. Die Förderleitung kann hierbei eine Pumpe umfassen, und auch als Pumpleitung bezeichnet werden. Die Förderleitung kann insbesondere als Rohrsystem ausgebildet sein.

Besonders bevorzugt kann vorgesehen sein, dass zur Erzeugung des Schaumes ein Schaumbildner und/oder ein Luftporenmittel verwendet wird. Mit anderen Worten kann vorgesehen sein, dass das Mörtelzwischenprodukt einen Schaumbildner und/oder ein Luftporenmittel aufweist. Ein Schaumbildner unterscheidet sich von einem Luftporenmittel in der Größe und Menge der erzeugten Luftporen. Durch den Schaumbildner und/oder das Luftporenmittel kann ein besonders stabiler Schaum erzeugt werden, welcher insbesondere gegenüber den mechanischen Belastungen während der Förderung stabil ist.

Der Schaumbildner und/oder das Luftporenmittel kann insbesondere Talölfettsäure umfassen. Ein derartiger Schaumbildner und/oder Luftporenmittel kann insbesondere MasterAir 9010 der Firma BASF sein.

Der Schaumbildner und/oder das Luftporenmittel kann weiters Tenside enthalten.

Der Entschäumer kann insbesondere den Wirkstoff Polyoxylalkylenglycol, wie insbesondere der Entschäumer DCC oder MasterFinish DF 370 der Firma BASF, umfassen.

Besonders bevorzugt kann vorgesehen sein, dass der Entschäumer dem aufgeschäumten Mörtelzwischenprodukt nach dem Verlassen der Förderleitung beigemischt wird. Hierbei kann der Entschäumer über eine weitere Förderleitung eingebracht werden, welche benachbart zu der Förderleitung des Mörtelzwischenproduktes endet. Dadurch kann bei einer unregelmäßigen Förderung, wie dies beispielsweise bei einem Ringspaltmörtel sein kann, verhindert werden, dass der Schaum in der Förderleitung bereits zusammenbricht und der Frischmörtel die Förderleitung verstopft.

Alternativ kann vorgesehen sein, dass der Entschäumer in der Förderleitung dem Mörtelzwischenprodukt beigemengt wird. Hierbei findet eine teilweise Zerstörung des Schaumes bereits in einem Endbereich der Förderleitung statt, wobei der Frischmörtel bis zu Verlassen der Förderleitung noch pumpbar bleibt. Dies kann vorteilhaft sein, wenn eine kontinuierliche Förderung möglich ist.

Bevorzugt kann vorgesehen sein, dass in dem Endbereich der Förderleitung eine Mischvorrichtung angeordnet ist, um das Mörtelzwischenprodukt und den Entschäumer miteinander zu mischen.

Besonders bevorzugt kann weiters vorgesehen sein, dass der Frischmörtel nach dem Erhärten einen offenporösen Ringspaltmörtel ausbildet. Ein offenporöser Mörtel ist ein Mörtel, bei welchem die Luftporen, ähnlich wie bei einem Schwamm, miteinander verbunden sind. Ein Schaum würde im Gegensatz dazu geschlossene Luftporen bilden, welche einem Durchdringen des Wassers entgegenwirken würden. Durch den Entschäumer wird allerdings der Schaum zerstört, wodurch die Porosität des festen Ringspaltmörtels im Wesentlichen durch den Hohlraumgehalt der Zuschlagstoffkörnung und den Grad der Verfüllung dieses Hohlraumes mit Bindemittel und Wasser vorgegeben wird.

Weiters kann vorgesehen sein, dass der wasserdurchlässige Ringspaltmörtel einen Wasserdurchlässigkeitsbeiwert k_{f} von mindestens 10⁻⁵ m/s, insbesondere 10⁻⁴ m/s, bevorzugt 10⁻² m/s, aufweist. Dieser Wasserdurchlässigkeitsbeiwert k_{f} wird durch den Hohlraumgehalt der Zuschlagstoffe und dem Hohlraumgehalt der Zuschlagstoffe, des Wassers und des Bindemittels zusammen erreicht.

Bevorzugt kann vorgesehen sein, dass die Zuschlagstoffe zu mindestens 80% aus natürlichem Gestein bestehen. Die Zuschlagstoffe können insbesondere zumindest zum Teil aus dem vor Ort erzeugtem Aushub der Tunnelbohrmaschine entnommen werden. Dadurch können die Transportentfernungen für die Zuschlagstoffe gering gehalten werden.

Weiters kann vorgesehen sein, dass die Zuschlagstoffe eine Korngröße bis 4 mm aufweisen.

Weiters kann vorgesehen sein, dass die Zuschlagstoffe Leichtzuschlagstoffe umfassen.

Besonders bevorzugt kann vorgesehen sein, dass das Bindemittel ein Portlandzement und/oder ein latenthydraulisches Bindemittel ist. Die latenthydraulischen Bindemittel können insbesondere Hüttensand oder Flugasche sein. Als latenthydraulisches Bindemittel kann weiters Fluamix C der Firma Lafarge verwendet werden.

Als Bindemittel kann besonders bevorzugt ein Zement der Klasse CEM II, insbesondere CEM II /A-S verwendet werden. Das Bindemittel kann insbesondere die Festigkeitsklasse 42,5 N aufweisen.

Weiters kann vorgesehen sein, dass der Frischmörtel als Zusatzmittel ein Fließmittel und/oder Stabilisatoren umfasst. Dadurch kann das Absetzverhalten des Frischmörtels verbessert werden.

Für das Fließmittel kann besonders bevorzugt als Wirksubstanz Polycarboxylatether verwendet werden. Als Fließmittel kann insbesondere MasterGlenium Sky 553 der Firma BASF verwendet werden.

Für den Stabilisator kann besonders bevorzugt als Wirksubstanz modifizierte Stärke und/oder Melaminharzsulfonat verwendet werden. Als Stabilisator kann insbesondere Stabilisierer ST3 der Firma SIKA verwendet werden.

Besonders bevorzugt kann vorgesehen sein, dass der Frischmörtel einen Verzögerer umfasst. Ein Verzögerer ist eine Substanz, welche eine Reaktion zwischen dem Bindemittel und dem Wasser verzögert. Der Verzögerer kann insbesondere derart gewählt sein, dass ein Erhärten des Frischmörtels um mindestens drei Stunden verzögert wird.

Weiters kann vorgesehen sein, dass der Frischmörtel ein Verdickungsmittel, insbesondere Bentonit, besonders bevorzugt Na-Bentonit, umfasst. Durch das Verdickungsmittel kann erreicht werden, dass es zu keinem Absetzen des Schaumes kommt.

Weiters kann vorgesehen sein, dass der Frischmörtel einen Viskositätsregler, insbesondere Polymere, umfasst. Als Viskositätsregler kann insbesondere MasterMatrix SDC 150 der Firma BASF verwendet werden.

Eine besonders bevorzugte Ausführungsform des Frischmörtels weist als Beispiel folgende Rezeptur auf:

| | |
|---|---|
| Gestein rund 0/4 | 209 kg/m³ |
| Gestein rund 2/4 | 556 kg/m³ |
| Gestein kantig 2/4 | 626 kg/m³ |
| CEM II/A-S 42,5 N | 125 kg/m³ |
| Fluamix C | 125 kg/m³ |
| Wasser | 135 kg/m³ |
| MasterGlenium Sky 553 | 3 kg/m³ |
| MasterAir 9010 | 0,38 kg/m³ |
| MasterMatrix SDC 150 | 3 kg/m³ |
| MasterFinish DF 370 | 1 kg/m³ |
| Na-Bentonit | 6 kg/m³ |

Die besonders bevorzugte Ausführungsform des Frischmörtels weist einen Hohlraumgehalt der Zuschlagstoffkörnung von im Wesentlichen 35% auf. Weiters beträgt der Luftporengehalt der besonders bevorzugte Ausführungsform des Frischmörtels im Wesentlichen 30%. Nach dem Erhärten hat der wasserdurchlässige Ringspaltmörtel einen Hohlraumgehalt von im Wesentlichen 27%. Dieser Hohlraumgehalt ist höher als der Hohlraumgehalt des Frischmörtels bezüglich Zuschlagstoffkörnung, Wasser und Bindemittel zusammen, da chemische Reaktionen zwischen dem Wasser und dem Bindemittel zu einer Schrumpfung, und damit einer Erhöhung des Hohlraumgehaltes geführt haben,

## Patentansprüche

1. Verfahren zum Erzeugen eines wasserdurchlässigen Ringspaltmörtels, wobei
- ein aufgeschäumtes Mörtelzwischenprodukt gebildet wird, wobei das Mörtelzwischenprodukt Zuschlagstoffe, Wasser und Bindemittel umfasst, wobei die Zuschlagstoffe eine Zuschlagstoffkörnung mit einem Hohlraumgehalt zwischen 30% und 50% aufweisen, wobei die Zuschlagstoffe zu mindestens 80% aus natürlichem Gestein bestehen, wobei die Zuschlagstoffkörnung, das Wasser und das Bindemittel zusammen einen Hohlraumgehalt von 10% bis 25% aufweisen, wobei der Hohlraumgehalt der Zuschlagstoffkörnung, des Wassers und des Bindemittel zusammen dem eines fiktiven ungeschäumten Mörtelzwischenproduktes entspricht,
- das aufgeschäumte Mörtelzwischenprodukt durch eine Förderleitung in einen Ringspalt gefördert wird und unmittelbar nach dem Verlassen der Förderleitung einen Luftporengehalt aufweist, wobei der Luftporengehalt einen Volumenanteil geschlossener Luftporen in dem Mörtelzwischenprodukt im Vergleich zu einem Gesamtvolumen des Mörtelzwischenproduktes angibt,
welcher Luftporengehalt absolut um 10% bis 25% größer ist als der Hohlraumgehalt der Zuschlagstoffkörnung, des Wassers und des Bindemittels zusammen,
- im Bereich des Endes der Förderleitung aus dem Mörtelzwischenprodukt durch Beimischung eines Entschäumers ein Frischmörtel gebildet wird,
- und der Schaum durch den Entschäumer vor dem Erhärten des Frischmörtels zu dem Ringspaltmörtel zumindest teilweise zerstört wird.

2. Verfahren nach Anspruch 1, **dadurch gekennzeichnet, dass** die Zuschlagstoffe eine Zuschlagstoffkörnung mit einem Hohlraumgehalt zwischen 35% und 45% aufweisen.

3. Verfahren nach Anspruch 1 oder 2, **dadurch gekennzeichnet, dass** das Mörtelzwischenprodukt durch die Förderleitung mittels einer Pumpe gepumpt wird.

4. Verfahren nach einem der Ansprüche 1 bis 3, **dadurch gekennzeichnet, dass** zur Erzeugung des Schaumes ein Schaumbildner und/oder ein Luftporenmittel verwendet wird.

5. Verfahren nach Anspruch 1 bis 4, **dadurch gekennzeichnet, dass** der Entschäumer dem aufgeschäumten Mörtelzwischenprodukt nach dem Verlassen der Förderleitung beigemischt wird.

6. Verfahren nach Anspruch 1 bis 4, **dadurch gekennzeichnet, dass** der Entschäumer in der Förderleitung dem Mörtelzwischenprodukt beigemengt wird.

7. Frischmörtel zum Ausbilden eines wasserdurchlässigen Ringspaltmörtels umfassend ein aufgeschäumtes Mörtelzwischenprodukt, wobei das Mörtelzwischenprodukt Zuschlagstoffe, Wasser, Bindemittel und einen Schaum umfasst, wobei die Zuschlagstoffe eine Zuschlagstoffkörnung mit einem Hohlraumgehalt zwischen 30% und 50% aufweisen, dass die Zuschlagstoffkörnung, das Wasser und das Bindemittel zusammen einen Hohlraumgehalt von 10% bis 25% aufweisen, wobei der Hohlraumgehalt der Zuschlagstoffkörnung, des Wassers und des Bindemittels zusammen dem eines fiktiven ungeschäumten Mörtelzwischenproduktes entspricht, **dadurch gekennzeichnet, dass** die Zuschlagstoffe zu mindestens 80% aus natürlichen Gestein bestehen, dass das aufgeschäumte Mörtelzwischenprodukt einen Luftporengehalt aufweist, wobei der Luftporengehalt einen Volumenanteil geschlossener Luftporen in dem Mörtelzwischenprodukt im Vergleich zu einem Gesamtvolumen des Mörtelzwischenproduktes angibt, welcher Luftporengehalt absolut um 10% bis 25% größer ist als der Hohlraumgehalt der Zuschlagstoffkörnung, des Wassers und des Bindemittels zusammen, dass der Frischmörtel einen Entschäumer umfasst, und dass der Entschäumer ausgebildet ist den Schaum vor dem Erhärten des Frischmörtels zu einem Ringspaltmörtel zumindest teilweise zu zerstören.

8. Frischmörtel nach Anspruch 7, **dadurch gekennzeichnet, dass** die Zuschlagstoffe eine Zuschlagstoffkörnung mit einem Hohlraumgehalt zwischen 35% und 45% aufweisen.

9. Frischmörtel nach Anspruch 7 oder 8, **dadurch gekennzeichnet, dass** das Mörtelzwischenprodukt einen Schaumbildner und/oder ein Luftporenmittel aufweist.

10. Frischmörtel nach einem der Ansprüche 7 bis 9, **dadurch gekennzeichnet, dass** der Frischmörtel ein Verdickungsmittel, insbesondere Bentonit, umfasst.

11. Frischmörtel nach einem der Ansprüche 7 bis 10, **dadurch gekennzeichnet, dass** das Bindemittel ein Portlandzement und/oder ein latenthydraulisches Bindemittel ist.

12. Frischmörtel nach Anspruch einem der Ansprüche 7 bis 11, **dadurch gekennzeichnet, dass** der Frischmörtel einen Verzögerer umfasst.

## Claims

1. Method for producing a water-permeable annular-gap mortar, wherein
- a foamed intermediate mortar product is formed, wherein the intermediate mortar product comprises aggregates, water and binder, wherein the aggregates have an aggregate granulation having a void content between 30% and 50%, wherein the aggregates consist of at least 80% natural rock, wherein the aggregate granulation, water and binder together have a void content of 10% to 25%, wherein the void content of the aggregate granulation, water and binder together correspond to that of a notional non-foamed intermediate mortar product,
- the foamed intermediate mortar product is conveyed through a conveying line into an annular gap and has an air-pore content immediately after leaving the conveying line, wherein the air-pore content indicates a volume fraction of closed air pores in the intermediate mortar product in comparison with a total volume of the intermediate mortar product, which air-pore content is greater in absolute terms by 10% to 25% than the void content of the aggregate granulation, the water and the binder together,
- a fresh mortar is formed from the intermediate mortar product by adding a defoamer in the area of the end of the conveying line,
- and the foam is at least partially destroyed by the defoamer before the fresh mortar hardens into the annular-gap mortar.

2. Method according to claim 1, **characterized in that** the aggregates have an aggregate granulation with a void content between 35% and 45%.

3. Method according to claim 1 or 2, **characterized in that** the intermediate mortar product is pumped through the conveying line by means of a pump.

4. Method according to one of claims 1 to 3, **characterized in that** a foaming agent and/or an air-entraining agent is used to produce the foam.

5. Method according to claim 1 to 4, **characterized in that** the defoamer is admixed to the foamed intermediate mortar product after leaving the conveying line.

6. Method according to claim 1 to 4, **characterized in that** the defoamer is added to the intermediate mortar product in the conveying line.

7. Fresh mortar for forming a water-permeable annular-gap mortar comprising a foamed intermediate mortar product, wherein the intermediate mortar product comprises aggregates, water, binder and a foam, wherein the aggregates have an aggregate granulation with a void content between 30% and 50%, that the aggregate granulation, the water and the binder together have a void content of 10% to 25%, wherein the void content of the aggregate granulation, water and binder together correspond to that of a notional non-foamed intermediate mortar product, **characterized in that** the aggregates consist of at least 80% natural rock, that the foamed intermediate mortar product has an air void content, wherein the air void content indicates a volume fraction of closed air voids in the intermediate mortar product compared with a total volume of the intermediate mortar product, which air void content is greater in absolute terms by 10% to 25% than the void content of the aggregate granulation, the water and the binder together, that the fresh mortar comprises a defoamer, and that the defoamer is designed to at least partially destroy the foam before the fresh mortar hardens to an annular-gap mortar.

8. Fresh mortar according to claim 7, **characterized in that** the aggregates have an aggregate granulation with a void content between 35% and 45%.

9. Fresh mortar according to claim 7 or 8, **characterized in that** the intermediate mortar product comprises a foaming agent and/or an air-entraining agent.

10. Fresh mortar according to one of claims 7 to 9, **characterized in that** the fresh mortar comprises a thickening agent, in particular bentonite.

11. Fresh mortar according to one of claims 7 to 10, **characterized in that** the binder is a Portland cement and/or a latent hydraulic binder.

12. Fresh mortar according to one of claims 7 to 11, **characterized in that** the fresh mortar comprises a retarder.

## Revendications

1. Procédé pour produire un mortier de bourrage perméable à l'eau, dans lequel
- un produit intermédiaire pour mortier expansé est formé, lequel produit intermédiaire pour mortier contient des additifs, de l'eau et du liant, les additifs ayant des grains d'additifs avec un taux de vide comprise entre 30 % et 50 %, les additifs étant composés au moins à 80 % de roche naturelle, les grains d'additifs, l'eau et le liant présentant ensemble un taux de vide de 10 % à 25 %, le taux de vide des grains d'additifs, de l'eau et du liant ensemble correspondant à celui d'un produit intermédiaire pour mortier non expansé fictif,
- le produit intermédiaire pour mortier expansé est transporté par une conduite de transport dans un espace annulaire et présente, immédiatement après être sorti de la conduite de transport, un taux de pores d'air, le taux de pores d'air représentant une part du volume de pores plein d'air fermés dans le produit intermédiaire pour mortier par rapport à un volume total du produit intermédiaire pour mortier,
lequel taux de pores d'air est plus grand en valeur absolue de 10 % à 25 % que le taux de vide des grains d'additifs, de l'eau et du liant ensemble,
- un mortier frais est formé à l'extrémité de la conduite de transport à partir du produit intermédiaire pour mortier par l'ajout d'un agent antimousse
- et la mousse est au moins partiellement détruite par l'agent antimousse avant la prise du mortier frais pour donner le mortier de bourrage.

2. Procédé selon la revendication 1, **caractérisé en ce que** les additifs présentent des grains d'additifs avec un taux de vide compris entre 35 % et 45 %.

3. Procédé selon la revendication 1 ou 2, **caractérisé en ce que** le produit intermédiaire pour mortier est pompé à travers la conduite de transport au moyen d'une pompe.

4. Procédé selon l'une des revendications 1 à 3, **caractérisé en ce que** qu'un agent moussant et/ou un agent entraîneur d'air sont utilisés pour produire la mousse.

5. Procédé selon la revendication 1 à 4, **caractérisé en ce que** l'agent antimousse est mélangé au produit intermédiaire pour mortier expansé après que celui-ci est sorti de la conduite de transport.

6. Procédé selon la revendication 1 à 4, **caractérisé en ce que** l'agent antimousse est ajouté au produit intermédiaire pour mortier dans la conduite de transport.

7. Mortier frais pour la formation d'un mortier de bourrage perméable à l'eau comprenant un produit intermédiaire pour mortier expansé, lequel produit intermédiaire pour mortier contient des additifs, de l'eau, du liant et une mousse, les additifs ayant des grains d'additifs avec un taux de vide compris entre 30 % et 50 %, les grains d'additif, l'eau et le liant présentant ensemble un taux de vide de 10 % à 25 %, le taux de vide des grains d'additifs, de l'eau et du liant ensemble correspondant à celui d'un produit intermédiaire pour mortier non expansé fictif, **caractérisé en ce que** les additifs sont composés au moins à 80 % de roche naturelle, **en ce que** le produit intermédiaire pour mortier expansé présente taux de pores d'air, le taux de pores d'air indiquant une part du volume de pores plein d'air fermés dans le produit intermédiaire pour mortier par rapport à un volume total du produit intermédiaire pour mortier, lequel taux de pores d'air est plus grand en valeur absolue de 10 % à 25 % que le taux de vide des grains d'additifs, de l'eau et du liant ensemble, **en ce que** le mortier frais contient un agent antimousse et **en ce que** l'agent antimousse est conçu pour détruire au moins partiellement la mousse avant la prise du mortier frais pour donner un mortier de bourrage.

8. Mortier frais selon la revendication 7, **caractérisé en ce que** les additifs présentent des grains d'additifs avec un taux de vide compris entre 35 % et 45 %.

9. Mortier frais selon la revendication 7 ou 8, **caractérisé en ce que** le produit intermédiaire pour mortier contient un agent moussant et/ou un agent entraîneur d'air.

10. Mortier frais selon l'une des revendications 7 à 9, **caractérisé en ce qu'**il contient un agent épaississant, en particulier de la bentonite.

11. Mortier frais selon l'une des revendications 7 à 10, **caractérisé en ce que** le liant est un ciment Portland et/ou un liant hydraulique latent.

12. Mortier frais selon l'une des revendications 7 à 11, **caractérisé en ce que** le mortier frais contient un retardateur.
